# EUROPEAN PATENT APPLICATION

(11) **EP 3 407 657 A1**
(43) Date of publication of application: **28.11.2018**
(21) Application number: 17741375.4
(22) Date of filing: 17.01.2017
(51) Int. Cl.: H04W 72/08, H04W 4/04, H04W 92/18

(54) **USER EQUIPMENT AND COMMUNICATION METHOD**

(30) Priority: 22.01.2016 JP 2016011072
(71) Applicant: NTT DOCOMO, INC., Chiyoda-ku Tokyo 100-6150 (JP)
(72) Inventor: YASUKAWA, Shimpei, Tokyo 100-6150 (JP); NAGATA, Satoshi, Tokyo 100-6150 (JP); ZHAO, Qun, Beijing 100190 (CN)
(74) Representative: Hoffmann Eitle
(86) International application number: PCT/JP2017/001391
(87) International publication number: WO 2017/126497

(57) **Abstract**

There is provided user equipment that supports D2D communication and cellular communication, the user equipment including a receiver that receives a radio parameter for the D2D communication corresponding to radio quality of a downlink signal transmitted from a base station or a propagation delay between the base station and the user equipment; and a communication unit that performs the D2D communication using the received radio parameter for the D2D communication corresponding to the radio quality or the propagation delay.

## Description

### TECHNICAL FIELD

The present invention relates to user equipment and a communication method.

### BACKGROUND ART

In long term evolution (LTE) and a successor system of LTE (for example, also referred to as "LTE advanced (LTE-A)," "future radio access (FRA)," "4G," etc.), a device to device (D2D) technique has been studied, in which units of user equipment directly communicate with each other without intervention of a radio base station (for example, Non-Patent Document 1).

D2D enables communication to be performed between user equipment and user equipment, even if traffic between user equipment and a base station is to be reduced, or even if a base station becomes unable to communicate during a disaster, etc.

D2D is classified roughly into D2D discovery for discovering other units of user equipment capable of performing communication and D2D communication for direct communication between units of user equipment (also referred to as "device-to-device direct communication," etc.). Hereinafter, when it is unnecessary to distinguish the D2D communication, the D2D discovery, and the like, they are referred to simply as "D2D." Further, signals which are transmitted and received through D2D are referred to as "D2D signals."

Additionally, in 3rd Generation Partnership Project (3GPP), a technique of implementing V2X by extending a D2D function has been studied.

### Related Art Document

### [Non-Patent Document]

Non-Patent Document 1: "Key drivers for LTE success: Services Evolution," September, 2011, 3GPP, Internet URL: http://www.3gpp.org/ftp/Information/presentations/presenta tions_2011/2011_09_LTE_Asia/2011_LTE_ Asia_3GPP_Service_evolution.pdf

### SUMMARY OF THE INVENTION

### PROBLEM TO BE SOLVED BY THE INVENTION

In the V2X communication, for example, an operation using cellular communication for the V2X communication within the coverage and an operation of simultaneously performing the cellular communication for non-V2X communication while using D2D for V2X communication within the coverage are also assumed.

There is a need for a technique that allows coexistence of the D2D communication and the cellular communication.

### MEANS TO SOLVE THE PROBLEM

According to an aspect of the present invention, there is provided user equipment that supports D2D communication and cellular communication, the user equipment including a receiver that receives a radio parameter for the D2D communication, the radio parameter corresponding to radio quality of a downlink signal transmitted from a base station or a propagation delay between the base station and the user equipment, and a communication unit that performs the D2D communication using the received radio parameter for the D2D communication corresponding to the radio quality or the propagation delay.

### ADVANTAGEOUS EFFECTS OF THE INVENTION

According to the disclosed technology, there is provided a technique that allows coexistence of the D2D communication and the cellular communication.

### BRIEF DESCRIPTION OF THE DRAWINGS

FIG. 1 is a diagram illustrating V2X;
FIG. 2 is a diagram illustrating an operation form of V2X;
FIG. 3A is a diagram illustrating D2D;
FIG. 3B is a diagram illustrating D2D;
FIG. 4 is a diagram illustrating a MAC PDU used for D2D communication;
FIG. 5 is a diagram illustrating a format of an SL-SCH subheader;
FIG. 6 is a diagram illustrating an example of a channel structure used in D2D;
FIG. 7A is a diagram illustrating an exemplary structure of a PSDCH;
FIG. 7B is a diagram illustrating the exemplary structure of the PSDCH;
FIG. 8A is a view illustrating exemplary structures of a PSCCH and a PSSCH;
FIG. 8B is a view illustrating the exemplary structures of the PSCCH and the PSSCH;
FIG. 9A is a diagram illustrating a resource pool configuration;
FIG. 9B is a diagram illustrating the resource pool configuration;
FIG. 10 is a diagram illustrating an exemplary configuration of a radio communication system according to the present embodiment;
FIG. 11 is a diagram illustrating a communication method according to an embodiment;
FIG. 12 is a sequence diagram illustrating a processing procedure (1/3) of configuring a D2D radio parameter according to the embodiment;
FIG. 13 is a sequence diagram illustrating a processing procedure (2/3) of configuring the D2D radio parameter according to the embodiment;
FIG. 14 is a sequence diagram illustrating a processing procedure (3/3) of configuring the D2D radio parameter according to the embodiment;
FIG. 15 is a diagram illustrating a communication method according to another embodiment;
FIG. 16 is a diagram illustrating an exemplary reception operation in a base station;
FIG. 17 is a sequence diagram illustrating a processing procedure (1/2) of configuring a D2D radio parameter according to the other embodiment;
FIG. 18 is a sequence diagram illustrating a processing procedure (2/2) of configuring a D2D radio parameter according to the other embodiment;
FIG. 19 is a sequence diagram illustrating a processing procedure of transmitting priority configuration information according to a further embodiment;
FIG. 20A is a diagram illustrating an example of priority configuration information;
FIG. 20B is a diagram illustrating the example of priority configuration information;
FIG. 21 is a diagram illustrating an example of a functional configuration of user equipment according to the present embodiment;
FIG. 22 is a diagram illustrating an example of a functional configuration of a base station according to the present embodiment;
FIG. 23 is a diagram illustrating an example of a hardware configuration of user equipment according to the present embodiment; and
FIG. 24 is a diagram illustrating an example of a hardware configuration of a base station according to the present embodiment.

### EMBODIMENTS OF THE INVENTION

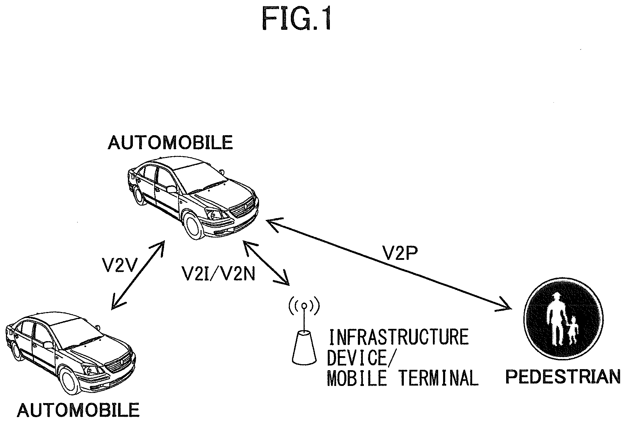

V2X is a part of intelligent transport systems (ITS), and is a generic term of vehicle to vehicle (V2V) indicating a communication form performed between automobiles, vehicle to infrastructure (V2I) indicating a communication form performed between an automobile and a road-side unit (RSU) installed at a side of a road, vehicle to nomadic device (V2N) indicating a communication form performed between an automobile and a mobile terminal of a driver, and vehicle to pedestrian (V2P) indicating a communication form performed between an automobile and a mobile terminal of a pedestrian as illustrated in FIG. 1.

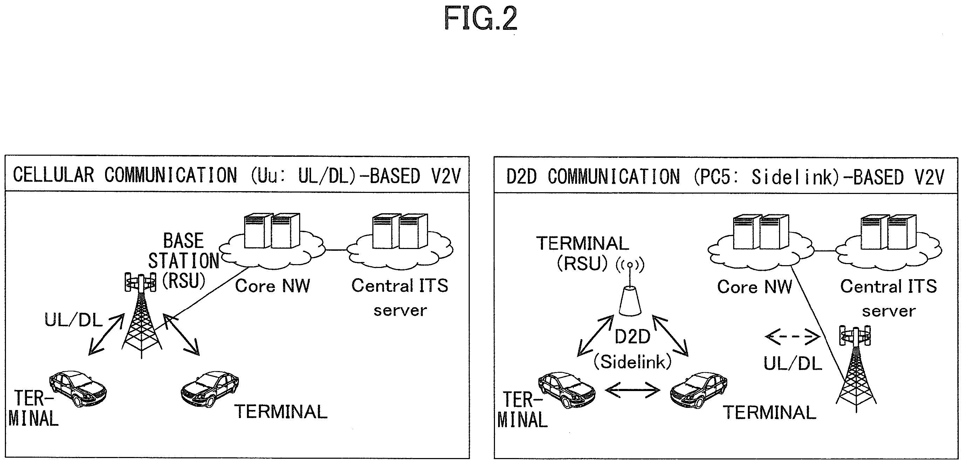

Currently, in 3GPP, an operation using cellular communication (Uu: downlink (DL)/uplink (UL)) for V2X communication and an operation using D2D (PC5: sidelink (SL)) for V2X communication are studied, as illustrated in FIG. 2.

In the V2X communication, for example, an operation using cellular communication for the V2X communication within the coverage and an operation of simultaneously performing the cellular communication for non-V2X communication while using D2D for V2X communication within the coverage are also assumed.

However, when D2D is used for the V2X communication, an operation using high transmission power (such as 23 dBm) to secure the coverage is assumed to be performed. Therefore, it is considered to be necessary to specify a communication scheme in which interference that may occur between the D2D communication and the cellular communication is considered. Further, in order to implement communication interception (lawful interception (LI)) or implement service provision by collecting V2X packets through an ITS server, an operation in which a base station receives a D2D signal is assumed to be performed. Therefore, it is considered to be necessary to specify a communication scheme in which a mismatch between a reception timing of the D2D signal using some UL resources and a reception timing of a UL signal is considered. Further, it is considered to be necessary to provide a mechanism which is capable of determining which of the D2D communication and the cellular communication is used when user equipment transmits V2X packets within the coverage.

Note that, when the V2X is considered to be a type of D2D, the above problems are not limited to the V2X but become problems that may occur in overall D2D.

Hereinafter, exemplary embodiments of the present invention is described with reference to the appended drawings. Embodiments to be described below are merely examples, and embodiments to which the present invention is applied are not limited to the following embodiments. For example, a radio communication system according to the present embodiment is assumed to be a system of a scheme complying with LTE, but the present invention is not limited to LTE but applicable to other schemes. In this specification and claims, "LTE" is used in a broad sense including Releases 10, 11, 12, 13, or 14 of 3GPP or a 5^{th} generation communication scheme corresponding to releases subsequent to Release 14 in addition to communication schemes corresponding to Release 8 or 9 of 3GPP.

Further, V2X is mainly dealt with in the present embodiment, but the technology according to the present embodiment is not limited to V2X but applicable to overall D2D. Further, "D2D" includes V2X as a meaning thereof.

Further, "D2D" is used in a broad sense including a processing procedure in which a base station receives (monitors) the D2D signals and a processing procedure in which in the case of RRC idle or when a connection with a base station eNB is not established, user equipment UE transmits uplink signals to the base station eNB in addition to a processing procedure in which transmission and reception of D2D signals are performed between units of user equipment UE.

Further, "D2D communication" means communication based on sidelink and communication based on PC5. Furthermore, "cellular communication" means communication based on DL, UL, and Uu unless otherwise stated.

### <Overview of D2D>

An overview of D2D specified in LTE is described. The technology of D2D described here can be used even in V2X, and UE according to an embodiment of the present invention can transmit and receive the D2D signal according to this technology.

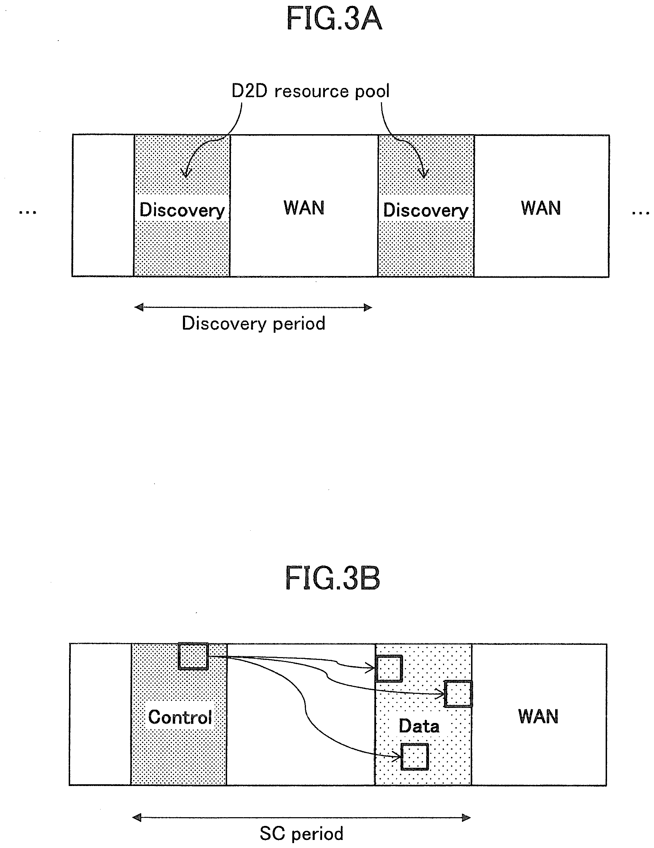

As described above, D2D is roughly divided into "D2D discovery" and "D2D communication." For the "D2D discovery," as illustrated in FIG. 3A, a resource pool for a discovery message is secured at intervals of discovery periods, and UE transmits the discovery message within the resource pool. In further detail, there are a type 1 and a type 2b. In the type 1, the UE autonomously selects transmission resources from the resource pool. In the type 2b, semi-static resources are allocated through higher layer signaling (for example, an RRC signal).

For the "D2D communication," a resource pool for SCI/data transmission is secured periodically as illustrated in FIG. 3B. UE at a transmission side notifies a reception side of resources for data transmission and the like using an SCI through resources selected from a control resource pool (a resource pool for SCI transmission), and transmits data through resources for data transmission. In further detail, for the "D2D communication," there are a mode 1 and a mode 2. In the mode 1, resources are dynamically allocated through an (E) PDCCH transmitted from an eNB to UE. In the mode 2, UE autonomously selects transmission resources from the resource pool. For the resource pool, one which is notified through an SIB or one which is predefined is used.

In LTE, a channel used for the "D2D discovery" is called a physical sidelink discovery channel (PSDCH), a channel for transmitting control information such as an SCI in the "D2D communication" is called a physical sidelink control channel (PSCCH), and a channel for transmitting data is called a physical sidelink shared channel (PSSCH) (Non-Patent Document 2).

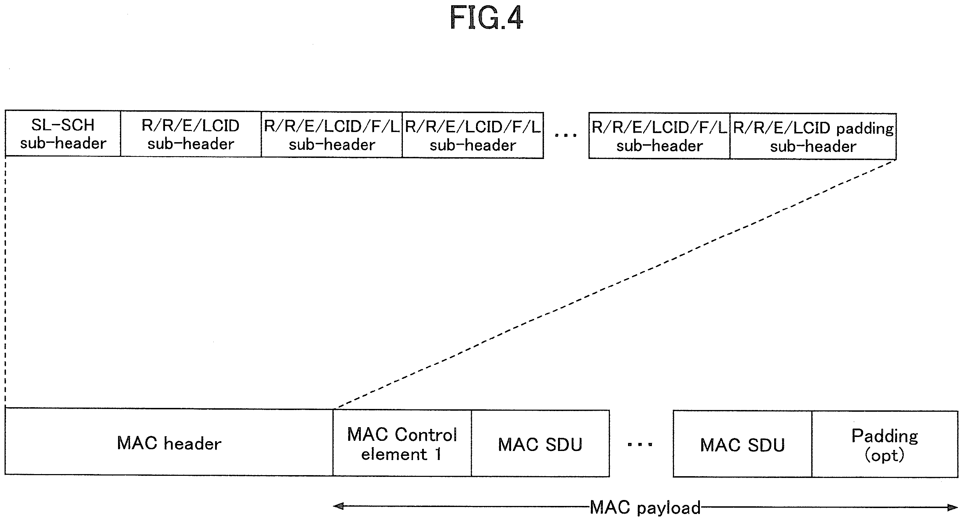

As illustrated in FIG. 4, a medium access control (MAC) protocol data unit (PDU) used for the D2D communication is configured with at least a MAC header, a MAC control element, MAC service data unit (SDU), and padding. The MAC PDU may include other information. The MAC header is configured with one sidelink shared channel (SL-SCH) subheader and one or more MAC PDU subheaders.

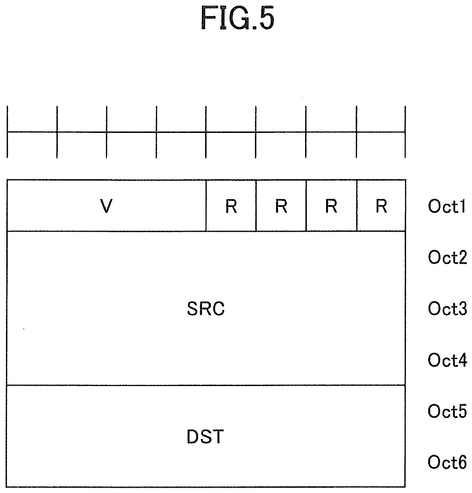

As illustrated in FIG. 5, the SL-SCH subheader is configured with a MAC PDU format version (V), transmission source information (SRC), transmission destination information (DST), reserved bits (R), and the like. V is allocated to the head of the SL-SCH subheader, and indicates a MAC PDU format version used by the UE. Information related to a transmission source is configured in the transmission source information. An identifier related to a ProSe UE ID may be configured in the transmission source information. Information related to a transmission destination is configured in the transmission destination information. Information related to a ProSe Layer-2 Group ID of a transmission destination may be configured in the transmission destination information.

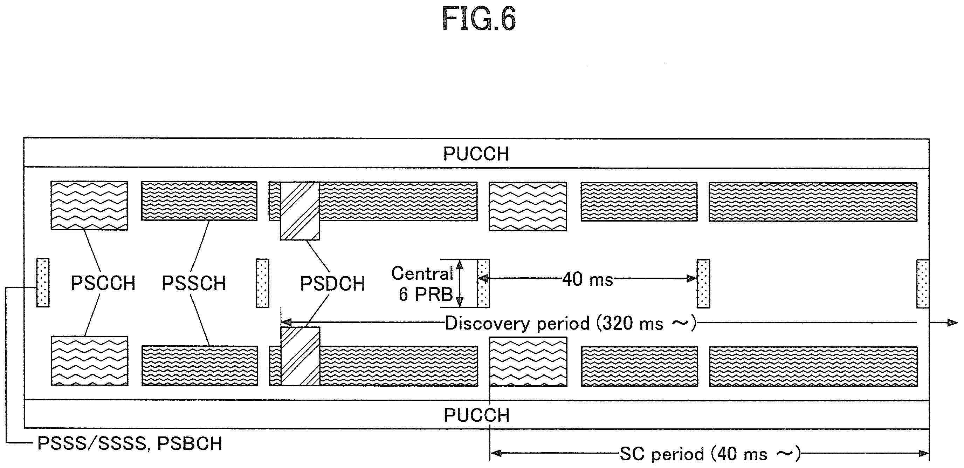

An example of a channel structure of D2D is illustrated in FIG. 6. As illustrated in FIG. 6, a resource pool of the PSCCH used for the "D2D communication" and a resource pool of the PSSCH are allocated. Further, a resource pool of the PSDCH used for the "D2D discovery" is allocated at a cycle longer than a cycle of a channel of the "D2D communication."

A primary sidelink synchronization signal (PSSS) and a secondary sidelink synchronization signal (SSSS) are used as a D2D synchronization signal. For example, a physical sidelink broadcast channel (PSBCH) for transmitting broadcast information such as a system band, a frame number, resource configuration information, and the like of D2D is used for an operation outside the coverage.

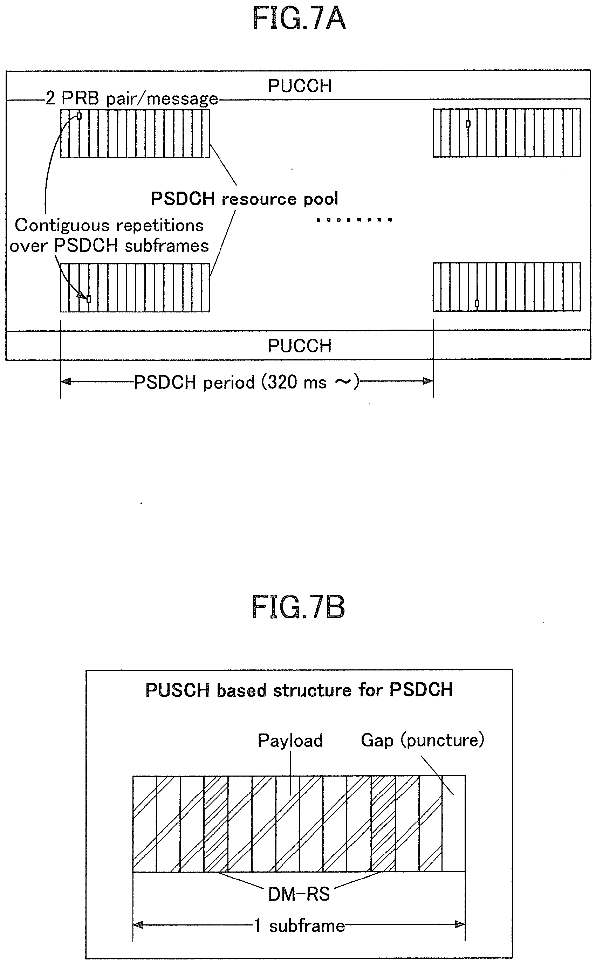

FIG. 7A illustrates an example of the resource pool of the PSDCH used for the "D2D discovery." Since the resource pool is configured through a bitmap of a subframe, it becomes a resource pool of an image illustrated in FIG. 7A. Resource pools of other channels are the same. Further, the PSDCH is repeatedly transmitted (repetition) while performing frequency hopping. For example, the number of repetitions can be set to be a number from 0 to 4. Further, as illustrated in FIG. 7B, the PSDCH has a PUSCH-based structure and has a structure into which a demodulation reference signal (DM-RS) is inserted.

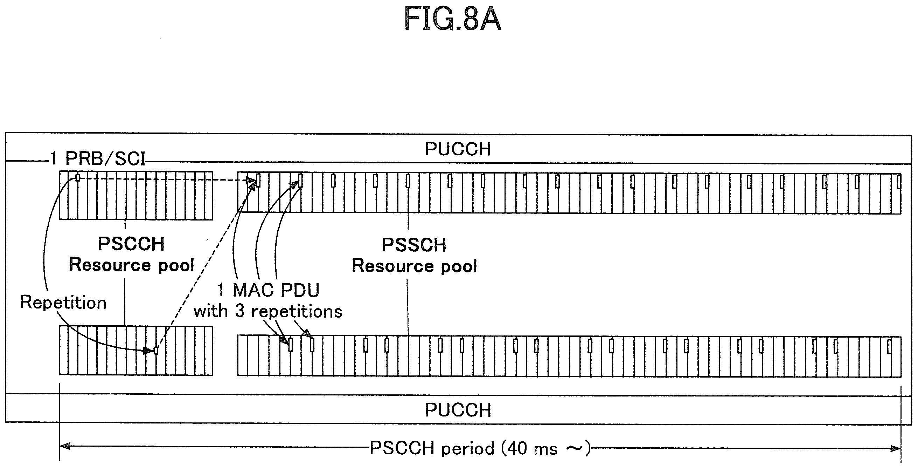

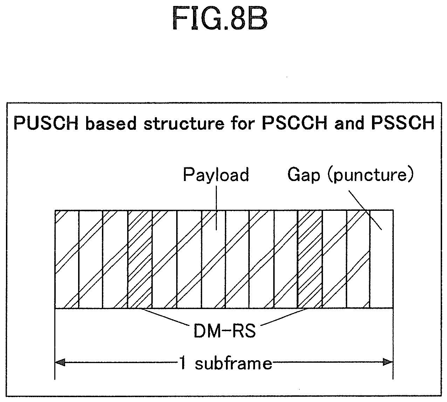

FIG. 8A illustrates an example of the resource pools of the PSCCH and the PSSCH used for the "D2D communication." As illustrated in FIG. 8A, the PSCCH is repeatedly transmitted (repetition) once while performing frequency hopping. The PSSCH is repeatedly transmitted (repetition) three times while performing frequency hopping. As illustrated in FIG. 8B, the PSCCH and the PSSCH have PUSCH-based structures and have structures into which DMRSs are inserted.

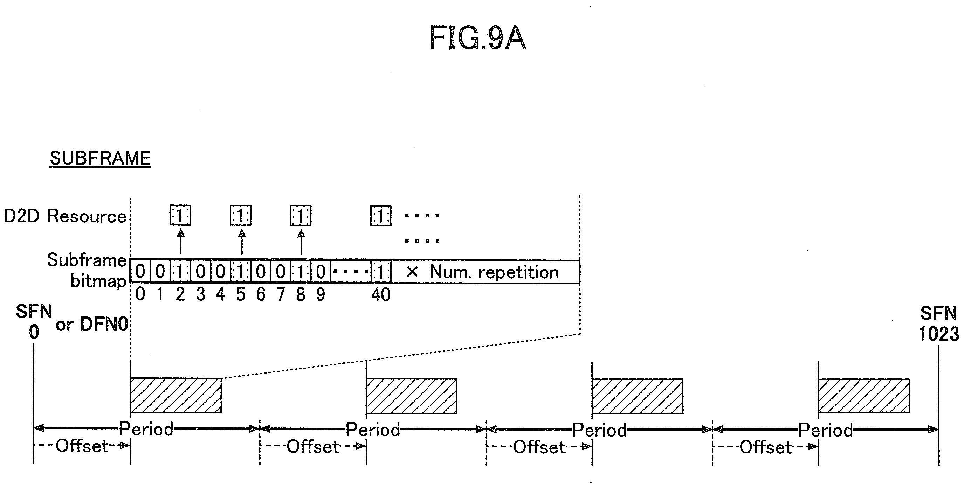

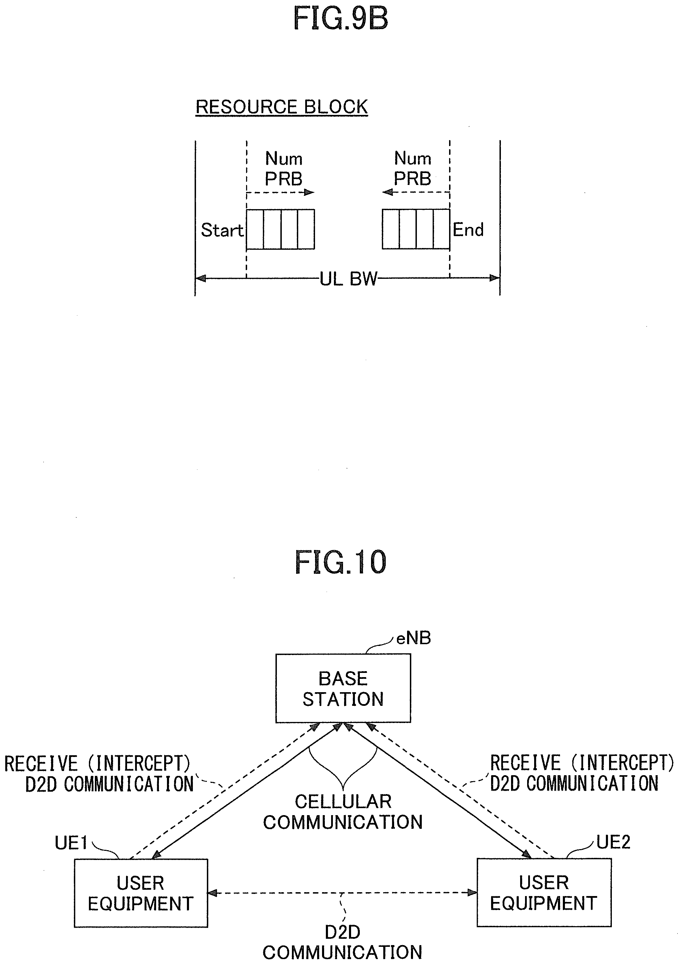

FIG. 9 illustrates an example of resource pool configurations in the PSCCH, the PSDCH, and the PSSCH (the mode 2). As illustrated in FIG. 9A, in a time direction, the resource pool is represented as a subframe bitmap. Further, the bitmap is repeated as many times as the number of num.reprtition. Further, offset indicating a start position in each cycle is specified.

In a frequency direction, contiguous allocation (contiguous) and non-contiguous allocation (non-contiguous) are possible. FIG. 9B illustrates an example of non-contiguous allocation, and a start PRB, an end PRB, the number of PRBs (numPRB) are specified as illustrated in FIG. 9B.

### <System configuration>

FIG. 10 is a diagram illustrating an exemplary configuration of a radio communication system according to the present embodiment. As illustrated in FIG. 10, a radio communication system according to the present embodiment includes a base station eNB, user equipment UE1, and user equipment UE2. In FIG. 10, each of the user equipment UE1 and the user equipment UE2 has both a transmission function and a reception function. Hereinafter, if it is unnecessary to distinguish the user equipment UE1 and the user equipment UE2 particularly, they are referred to simply as "user equipment UE."

Each of the user equipment UE1 and the user equipment UE2 illustrated in FIG. 10 has a cellular communication function as user equipment UE in LTE and a D2D function including transmission and reception of signals in the above-mentioned channel. Further, each of the user equipment UE1 and the user equipment UE2 has a function of performing an operation to be described in the present embodiment. For the cellular communication function and the known D2D function, only some functions (a range in which the operation to be described in the present embodiment can be performed) may be provided, or all functions may be provided.

Further, each of the units of user equipment UE may be any device having the D2D function, but for example, the units of user equipment UE are terminals retained by a vehicle and a pedestrian, an RSU (UE type RSU having UE function), etc.

The base station eNB has a cellular communication function of a base station eNB in LTE and a function of enabling communication of the user equipment UE in the present embodiment (a resource allocation function, a configuration information notification function, etc.). Further, the base station eNB includes a RSU (an eNB type RSU having an eNB function).

The radio communication system according to the present embodiment is assumed to have a plurality of carriers usable for the D2D communication, but a plurality of carriers may be configured by one base station eNB or may be configured by a plurality of base stations eNB. Further, a plurality of carriers may be configured by a remote radio head (RRH).

In the present embodiment, the cellular communication is performed between the base station eNB and the user equipment UE, and the D2D communication or communication via the base station eNB is performed between the units of user equipment UE. Further, the base station eNB has a function of receiving (intercepting) the D2D communication between the units of user equipment UE.

The present embodiment is described below in detail.

### <Embodiment>

### (Overview of communication method)

In the embodiment, the user equipment UE operates to perform the D2D communication using a configuration of a radio parameter for the D2D communication according to a DL radio quality (hereinafter, referred to as a "D2D radio parameter").

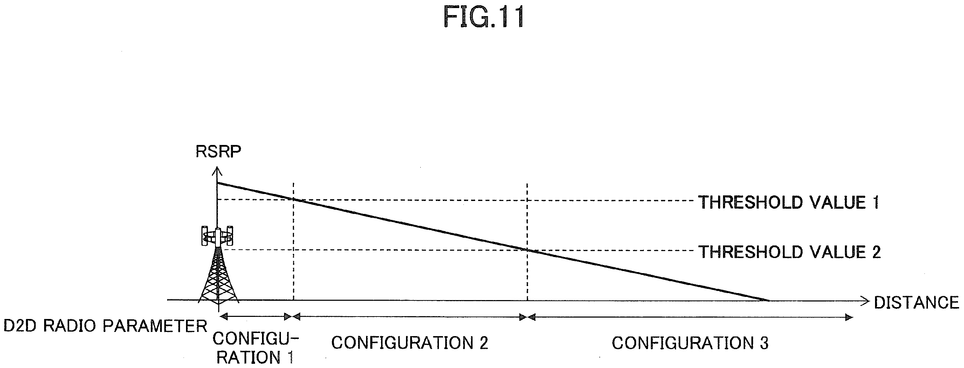

FIG. 11 is a diagram for describing a communication method according to the embodiment. As illustrated in FIG. 11, the user equipment UE measures a radio quality of a DL signal transmitted from the base station eNB and performs the D2D communication using a configuration of the D2D radio parameter according to a measurement result. In the example of FIG. 11, the user equipment UE performs the D2D communication using the D2D radio parameter (of the configuration 1) when a receiving signal received power (RSRP) is a first threshold value or more, performs the D2D communication using the D2D radio parameter (of the configuration 2) when the RSRP is a second threshold value or more and less than the first threshold value, and performs the D2D communication using the D2D radio parameter (of the configuration 3) when the RSRP is less than the second threshold value. The radio quality may be a receiving signal received quality (RSRQ), a received signal strength indicator (RSSI), or a channel quality indicator (CQI) instead of the RSRP illustrated in FIG. 11. Any parameter may be used as long as it indicates a radio quality. In FIG. 11, the D2D radio parameter has three levels (the configurations 1 to 3), but it may have two levels or four or more levels. By defining the threshold values using finer units, it is possible to configure any number of levels.

The D2D radio parameter includes various types of parameters used for the user equipment UE to perform the D2D communication. Any parameter may be included in the D2D radio parameter, but more specifically, for example, a configuration of a transmission resource pool and a configuration of a reception resource pool are included. The configuration of the transmission/reception resource pool may include a subframe pattern in the resource pool (for example, a subframe pattern specified by a subframe bitmap as illustrated in FIG. 9A) in addition to the range of the resource pool. Further, the configuration of the transmission/reception resource pool may include information indicating a carrier (a carrier frequency).

Further, it may be possible to indicate to the user equipment UE to use UL communication instead of the D2D communication using the D2D radio parameter when the V2X packet is transmitted to another unit of user equipment UE. Specifically, information for explicitly indicating to use the UL communication instead of the D2D communication may be configured in the D2D radio parameter, and, in order to enable such a setting, the user equipment UE may report UE information for the D2D communication to the base station eNB and report a D2D or UL/DL communication request to the base station eNB instead of a resource request. Alternatively, an implicit indication to use the UL communication instead of the D2D communication may be provided when the configuration of the transmission resource pool is not included in the D2D radio parameter.

Further, it may be possible to provide an indication to the user equipment UE as to whether the reception (monitoring) of the D2D signal is performed using the D2D radio parameter. Specifically, when the configuration of the reception resource pool is not included in the D2D radio parameter, it may be recognized that the user equipment UE does not perform the reception (monitoring) of the D2D signal.

Further, the D2D radio parameter may include, when the D2D communication is performed, information indicating as to whether both a mode 1, in which the base station eNB is requested to allocate a resource, and a mode 2, in which the user equipment UE itself autonomously selects a transmission resource, are allowed; or one of the mode 1 and the mode 2 is allowed.

Further, the D2D radio parameter may further include information specifying transmission power of the D2D signal (a transmission power value, a parameter α used in fractional TPC, and Po). The present invention is not limited thereto, and other parameters may be included.

### (Operation example (version 1))

An operation example (version 1) using the communication method according to the embodiment is described. For example, in FIG. 11, an operation can be considered such that only the reception resource pool (a range X) is configured in the D2D radio parameter (of the configuration 1) without configuring the transmission resource pool; the transmission resource pool (a range A) and the reception resource pool (a range X) are configured in the D2D radio parameter (of the configuration 2); and the transmission resource pool (a range B) and the reception resource pool (the range X) are configured in the D2D radio parameter (of the configuration 3). The range X is assumed to include both the range A and the range B.

In the operation example (version 1), since the D2D radio parameter (of the configuration 1) is applied to the user equipment UE located near the center of the cell, the user equipment UE transmits the V2X packet using the UL communication instead of the D2D communication. Consequently, transmission of the D2D signal is prohibited near the center of the cell, and, thus, interference between the UL signal and the D2D signal in the base station eNB is reduced.

Further, in the operation example (version 1), since the range X includes both the range A and the range B (that is, the reception resource pool covers all transmission resource pools), the user equipment UE can receive the D2D signal transmitted from other units of user equipment UE regardless of its location.

For example, a modified example of the operation example (version 1) can be considered such that both the resource pools, which includes the reception resource pool, are not to be configured in the D2D radio parameter (of the configuration 1). As a result, the user equipment UE located at the center of the cell may be caused to forcibly skip monitoring of the D2D communication and caused to concentrate on DL reception.

### (Operation example (version 2))

Next, an operation example (version 2) using the communication method according to the embodiment is described. For example, in FIG. 11, the transmission resource pool (the range A) and the reception resource pool (the range X)are configured in the D2D radio parameter (of the configuration 1), and, at the same time, a configuration is made in the D2D radio parameter (of the configuration 1) such that only the resource allocation method of the mode 1 (the resource allocation method by the base station eNB) is allowed. In the D2D radio parameter (of the configuration 2), the transmission resource pool (the range B) and the reception resource pool (the range X) are configured, and, at the same time, a configuration is made in the D2D radio parameter (of the configuration 2) such that both the resource allocation method of the mode 1 and the resource allocation method of the mode 2 (UE's autonomous resource allocation) are allowed. In the D2D radio parameter (of the configuration 3), the transmission resource pool (range C) and the reception resource pool (the range X) are configured, and, at the same time, a configuration is made in the D2D radio parameter (of the configuration 3) such that only the resource allocation method of the mode 2 is allowed. The range X is assumed to include both the range A and the range B.

In the operation example (version 2), since the D2D radio parameter (of the configuration 3) is applied to the user equipment UE located near the cell edge, when the user equipment UE performs D2D communication, the user equipment UE performs the resource allocation operation of the mode 2. As a result, the user equipment UE located near the cell edge need not perform an operation of establishing an RRC connection with the base station eNB in order to request the base station eNB to perform the resource allocation, and, thus, the load of the base station eNB can be reduced. Further, since the user equipment UE located near the center of the cell performs only the resource allocation in the mode 1, a risk of the occurrence of resource collision between the UL communication and the D2D communication in the base station eNB can be reduced.

The operation examples (version 1 and version 2) have been described above, but various forms of operations can be performed using the communication method according to the embodiment in addition to the operation examples (version 1 and version 2). For example, in the D2D radio parameter (of the configuration 1), the transmission resource pool may be configured, and, at the same time, a configuration may be made in the D2D radio parameter such that the transmission power of the D2D signal is reduced. As a result, interference between the UL signal and the D2D signal in the base station eNB is reduced while allowing the user equipment UE located near the center of cell to transmit the D2D signals.

### (Configuration of D2D radio parameter)

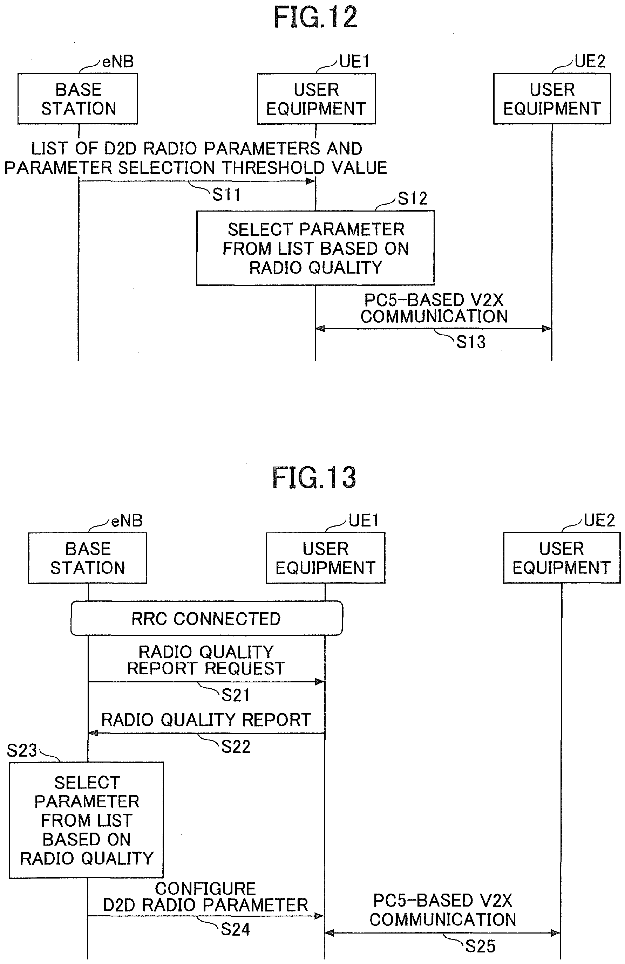

Next, processing procedures (versions 1 to 3) of configuring the D2D radio parameter in the user equipment UE is described by referring to the figures. In the embodiment, one of the processing procedures (versions 1 to 3) may be supported, and two or more or all of the processing procedures may be supported. In FIG. 12 to FIG. 14, for convenience of description, it is depicted that the D2D radio parameter is configured in the user equipment UE1; however, the D2D radio parameter is also configured in the user equipment UE2 by a similar processing procedure.

FIG. 12 is a sequence diagram illustrating a processing procedure (version 1) of configuring the D2D radio parameter according to the embodiment. As illustrated in FIG. 12, the base station eNB transmits a list including the D2D radio parameters for each parameter selection threshold value (a radio quality range) to the user equipment UE1 (S11). The list may be transmitted by broadcast information (SIB) or may be transmitted by RRC signaling. Further, instead of transmitting the list from the base station eNB to the user equipment UE1, the list may be pre-configured in the user equipment UE1 via a Subscriber Identity Module (SIM), a core network or the like. Then, the user equipment UE1 measures the radio quality of the DL signal transmitted from the base station eNB, and selects the D2D radio parameter according to a measurement result from the list including the D2D radio parameter for each parameter selection threshold value (the radio quality range) received in S 11 (S12). Then, the user equipment UE1 performs the D2D communication (PC5-based V2X communication) with another user equipment UE2 using the selected the D2D radio parameter (S13).

FIG. 13 is a sequence diagram illustrating the processing procedure (version 2) of configuring the D2D radio parameter according to the embodiment. In the processing procedure illustrated in FIG. 13, however, the user equipment UE1 needs to be in the RRC connected state unlike that of FIG. 12. As illustrated in FIG. 13, the base station eNB transmits a radio quality report request to the user equipment UE1 (S21). The user equipment UE1 measures the radio quality of the DL signal transmitted from the base station eNB and transmits a radio quality report including a measurement result to the base station eNB (S22). The base station eNB selects the D2D radio parameter corresponding to the measurement result received in step S22 from the list containing the D2D radio parameter for each parameter selection threshold value (the radio quality range) stored in its own memory or the like (S23). Then, the base station eNB configures the selected D2D radio parameter in the user equipment UE1 (S24). Subsequently, the user equipment UE1 performs the D2D communication (the PC5-based V2X communication) with another user equipment UE2 using the configured D2D radio parameter (S25).

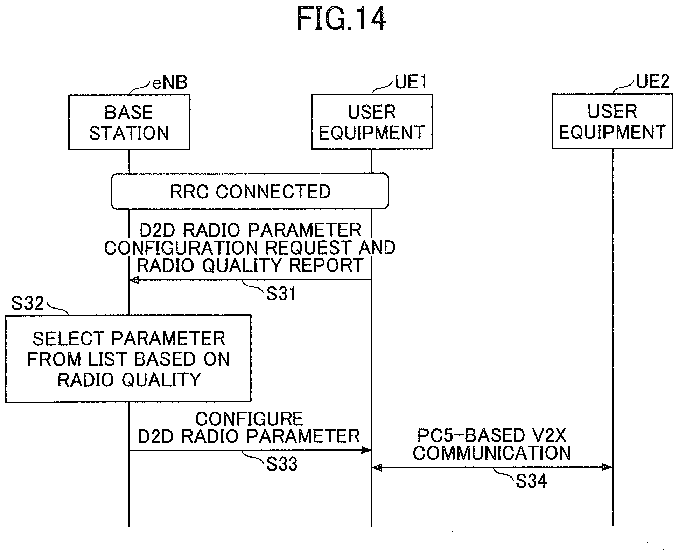

FIG. 14 is a sequence diagram illustrating a processing procedure (version 3) of configuring the D2D radio parameter according to the embodiment. However, in a processing procedure illustrated in FIG. 14, the user equipment UE1 needs to be in the RRC connected state. As illustrated in FIG. 14, the user equipment UE1 measures the radio quality of the DL signal transmitted from the base station eNB, and transmits a D2D radio parameter configuration request and a radio quality report including a measurement result to the base station eNB (S31). The radio quality report may be included in the D2D radio parameter configuration request. The D2D radio parameter configuration request and/or the radio quality report may be included in "sidelink UE information." The processes of step S32 to step S34 are the same as the processes of step S23 to step S25 of FIG. 13, and thus description thereof is omitted.

### (Supplemental matter in the embodiment)

The base station eNB may configure the user equipment UE using higher layer signaling (RRC signaling, SIB, or the like) so that the same V2X packet is transmitted through both the D2D communication and the UL communication. Even if it is not possible to perform base station monitoring of D2D, it is possible to monitor V2X communication details in the base station or obtain a diversity effect by performing transmission using both D2D and UL/DL interfaces.

By higher layer signaling (RRC signaling, SIB, etc.), the presence or absence of reception of each D2D resource pool by the base station eNB or the presence or absence of forwarding of a V2X packet to another unit of user equipment UE may be reported. The user equipment UE can determine whether the V2X packet is relayed between the user equipment UE and another unit of user equipment UE.

The configuration of the transmission/reception resource pool may be represented by an index value. For example, the RRC signaling amount may be reduced such that information in which the range of the transmission/reception resource pool is associated with an index value is pre-configured in the user equipment UE, and the base station eNB reports only the index value to the user equipment UE through the process of step S24 of FIG. 13 or step S33 of FIG. 14. The subframe pattern in the resource pool may be similarly associated with an index value.

The transmission/reception resource pool for the user equipment UE outside the coverage may be pre-configured in the user equipment UE. Further, the range of the transmission resource pool configured in the D2D radio parameter for the cell edge (for example, the configuration 3 of FIG. 11) may be included in the range of the reception resource pool for the user equipment UE outside the coverage. As a result, the user equipment UE outside the coverage can receive the D2D signal transmitted from the user equipment UE in the cell edge.

The D2D radio parameters of the respective parameter selection threshold values (the radio quality ranges) may overlap with each other. For example, an operation may be performed such that, in FIG. 11, the transmission resource pool of the range A is configured in the D2D radio parameter (of the configuration 1), the transmission resource pool of the range A + B is configured in the D2D radio parameter (of the configuration 2), and the transmission resource pool of the range B is configured in the D2D radio parameter (of the configuration 3). Further, the parameter selection threshold values (the radio quality ranges) may also overlap each other. For example, the threshold values may be configured such that, in FIG. 11, the range to which the D2D radio parameter (of the configuration 1) is applied overlaps the range to which the D2D radio parameter (of the configuration 2) is applied. Similarly, the threshold values may be set such that the range to which the D2D radio parameter (of the configuration 2) is applied overlaps the range.to which the D2D radio parameter (of the configuration 3) is applied.

Hysteresis may be applied to the parameter selection threshold value. For example, in FIG. 11, when the user equipment UE located at a position at which the radio quality is the first threshold value or more moves to a location at which the radio quality is less than the first threshold value, the D2D radio parameter of the configuration 1 may be continuously used until the radio quality becomes less than (the first threshold value + hysteresis (or the first threshold value - hysteresis)). Similarly, when the user equipment UE located at a position at which the radio quality is less than the first threshold value moves to a location at which the radio quality is the first threshold value or more, the D2D radio parameter of the configuration 2 may be continuously used until the radio quality becomes (the first threshold value - hysteresis (or the first threshold value + hysteresis)) or more. Here, the hysteresis is a value set to prevent frequent switching before and after the threshold value and may be a positive value or a negative value.

The embodiment is described above. According to the embodiment, by configuring the various D2D radio parameters, it is possible to reduce interference that may occur between the D2D communication and the cellular communication. Further, when the V2X packet is transmitted within the coverage, it is possible to cause the user equipment UE or the base station eNB to determine whether the D2D communication or the cellular communication is used.

### <Another embodiment>

### (Overview of communication method)

In the embodiment, the user equipment UE operates to perform the D2D communication using the configuration of the D2D radio parameter according to a propagation delay difference (a difference in propagation delay) with the base station eNB. In the embodiment, a transmission timing of the D2D signal in the user equipment UE is assumed to be a DL reception timing unless otherwise stated.

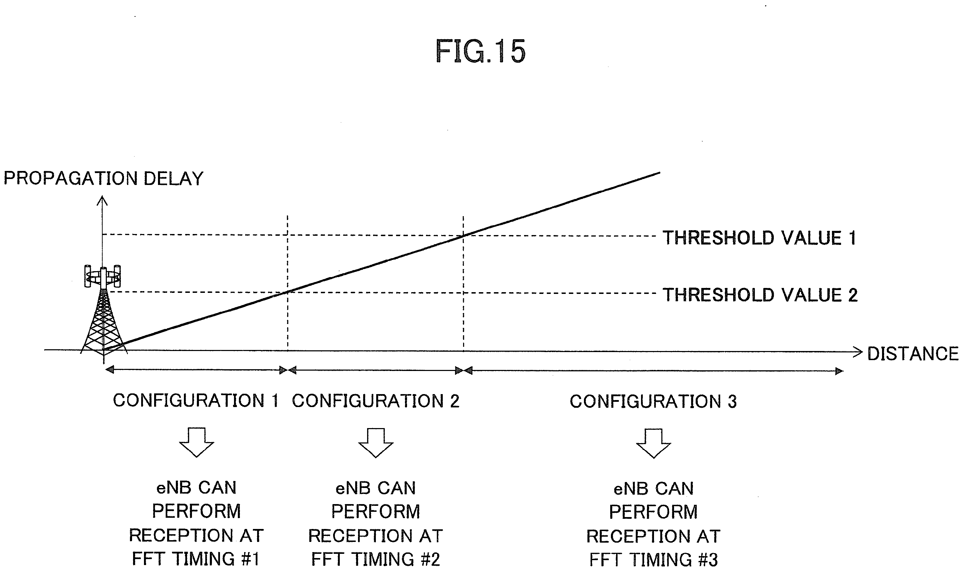

FIG. 15 is a diagram for describing a communication method according to the embodiment. As illustrated in FIG. 15, the user equipment UE receives the propagation delay difference with the base station eNB by a predetermined method and performs the D2D communication using the configuration of the D2D radio parameter according to a measurement result. The method of obtaining the propagation delay difference through the user equipment UE is described later.

In the example of FIG. 15, the user equipment UE performs the D2D communication using the D2D radio parameter (of the configuration 1) when the propagation delay difference is less than the second threshold value, and performs the D2D communication using the D2D radio parameter (of the configuration 2) when the propagation delay difference is the second threshold value or more and less than the first threshold value, and performs the D2D communication using the D2D radio parameter (of the configuration 3) when the propagation delay difference is the first threshold value or more. In FIG. 15, the D2D radio parameter may have three levels (the configurations 1 to 3) but may be two levels or four or more levels. By configuring the threshold values in finer units, any levels can be configured.

Similar to the previous embodiment, various parameters can be configured in the D2D radio parameter, and time division multiplexing (TDM) is applied, at least, to the configurations of the transmission resource pools on a configuration-by-configuration basis. In other words, in the example of FIG. 15, the range of the transmission resource pool configured in the D2D radio parameter (of the configuration 1), the range of the transmission resource pool configured in the D2D radio parameter (of the configuration 2), and the range of the transmission resource pool configured in the D2D radio parameter (of the configuration 3) are configured not to overlap one another on the time axis.

By configuring the D2D radio parameter as described, it is possible to classify a plurality of units of user equipment UE located in the cell by a group of units of user equipment UE located near the center of the cell (units of user equipment UE to which the configuration 1 is applied), a group of units of user equipment UE located between the center of the cell and the cell edge (units of user equipment UE to which the configuration 2 is applied), and a group of units of user equipment UE located near the cell edge (units of user equipment UE to which the configuration 3 is applied).

Further, within each group, the propagation delay differences between the units of user equipment UE and the base station eNB can be considered to be substantially equal. In other words, timings at which the D2D signals transmitted from the units of user equipment UE in the same group reach the base station eNB are considered to be substantially the same. Thus, the base station eNB can receive the D2D signals simultaneously transmitted from a plurality of units of user equipment UE belonging to each group at the same FFT timing. Further, since the ranges of the transmission resource pools in each group do not overlap on the time axis, the base station eNB can switch the FFT timing to the FFT timing according to the range of the transmission resource pool.

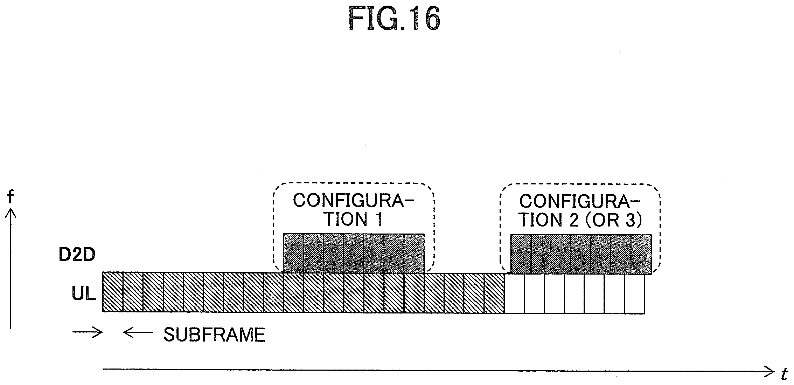

FIG. 16 is a diagram for describing an exemplary reception operation in the base station. In FIG. 16, a portion surrounded by the "configuration 1" indicates the range of the transmission resource pool configured in the D2D radio parameter (of the configuration 1). Similarly, a portion surrounded by the "configuration 2 (or 3)" indicates the range of the transmission resource pool configured in the D2D radio parameter (of the configuration 2 (or 3)). A configuration is made so that the UL signal is not transmitted in the resources of the same frequency in the transmission resource pool (that is, the D2D signal and the UL signal are frequency-multiplexed).

Here, since the propagation delay difference is small near the center of the cell, a timing at which the base station eNB receives the D2D signals transmitted from the group of units of user equipment UE located near the center of the cell (the group to which the configuration 1 is applied in FIG. 16) is considered to be substantially the same as a timing at which the UL signal is received (at least within a cyclic prefix (CP) length). Therefore, the base station eNB can receive the D2D signals transmitted from the group of units of user equipment UE located near the center of the cell and the UL signal at the same (single) FFT timing.

However, a timing at which the base station eNB receives the D2D signals transmitted from the group of units of user equipment UE located outside the center of the cell (the group to which the configuration 2 or 3 is applied in FIG. 16) is considered to be different from a timing at which the UL signal is received (deviation of at least a CP length or more occurs). In other words, it is considered to be difficult to receive the D2D signal and the UL signal with the same (single) FFT timing. In this regard, the base station eNB may receive the UL signal using an FFT timing corresponding to the UL signal in frequency resources in which the UL signal is transmitted (resources in which UL scheduling is performed) and further receive the D2D signal using an FFT timing corresponding to the D2D signal in resources of the range of the transmission resource pool. In other words, the base station eNB may simultaneously use two kinds of FFT timings.

However, when the user equipment UE transmits a D2D signal with large transmission power, the UL signal may be interfered due to influence of in-band-emission. In this regard, the base station eNB does not allocate UL resources (does not perform UL scheduling) in subframes corresponding to the range of the transmission resource pool configured in the D2D radio parameter (of the configuration 2 (or 3)), and thus only the D2D Signal may be received at a single FFT timing. The base station eNB can preferentially perform the reception of the D2D signal while avoiding the influence of the in-band-emission by not performing the UL scheduling. In this case, when resource allocation of the mode 1 (D2D transmission resource allocation by the base station eNB) is performed, the base station eNB may, based on the base station eNB's determination, allocate the UL resources to subframes to which the resources of the D2D signal are not allocated (performs UL scheduling).

### (Configuration of D2D radio parameter)

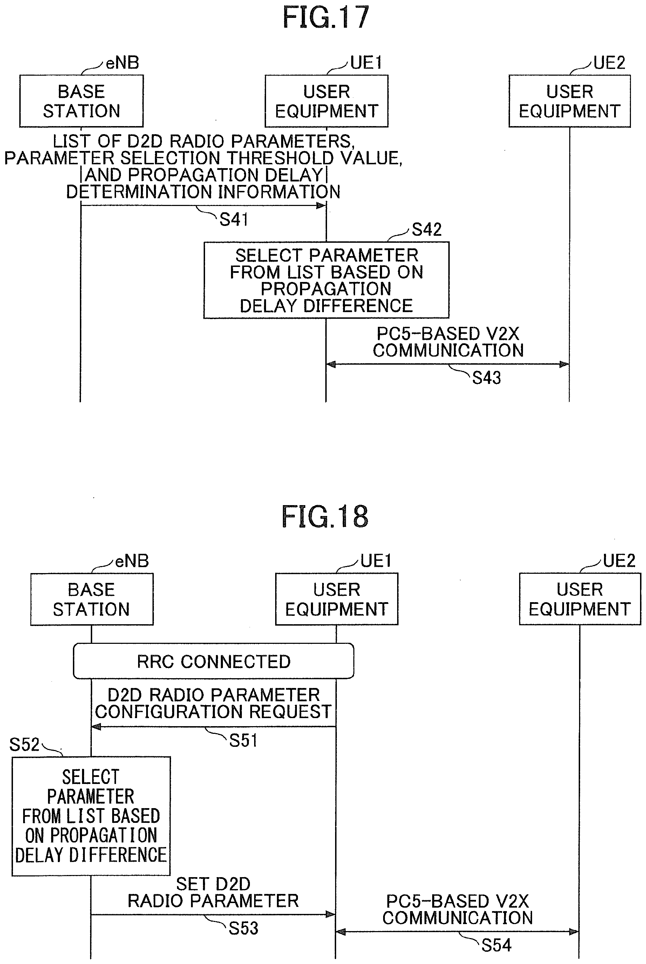

Next, the processing procedures (versions 1 and 2) of configuring the D2D radio parameter in the user equipment UE is described by referring to the figures. In the embodiment, only one of the processing procedures (version 1 and version 2) may be supported, or both of the processing procedures may be supported. In FIG. 17 and FIG. 18, for the sake of convenience of description, the D2D radio parameter is illustrated to be configured in the user equipment UE1, but the D2D radio parameter may also be configured in the user equipment UE2 by a similar processing procedure.

FIG. 17 is a sequence diagram illustrating a processing procedure (version 1) of configuring the D2D radio parameter according to the embodiment. As illustrated in FIG. 17, the base station eNB transmits, to the user equipment UE1, a list including the D2D radio parameter for each parameter selection threshold value (propagation delay difference) and propagation delay determination information (for example, a predetermined reference time or the like), which is used by the user equipment UE1 to measure the propagation delay (S41). The list and the propagation delay determination information may be transmitted by broadcast information (SIB) or may be transmitted by RRC signaling. Further, instead of transmitting the list from the base station eNB to the user equipment UE1, it may be pre-configured in the user equipment UE1 via a SIM, a core network or the like. Then, the user equipment UE1 measures the propagation delay difference with the base station eNB, and selects the D2D radio parameter according to a measurement result from the list including the D2D radio parameter of each parameter selection threshold value (the propagation delay difference) received in S41 (S42). Then, the user equipment UE1 performs the D2D communication (the PC5-based V2X communication) with another unit of user equipment UE2 using the selected the D2D radio parameter (S43) .

FIG. 18 is a sequence diagram illustrating the processing procedure (2/2) of setting the D2D radio parameter according to the embodiment. However, in the processing procedure illustrated in FIG. 18, the user equipment UE1 needs to be in the RRC connected state unlike that of FIG. 12. As illustrated in FIG. 18, the user equipment UE1 measures a predetermined reference time used for a calculation of the propagation delay difference with the base station eNB, and transmits the D2D radio parameter configuration request including the measurement result to the base station eNB (S51). The D2D radio parameter configuration request may be included in "sidelink UE information." The base station eNB measures the propagation delay difference between the base station eNB itself and the user equipment UE1 based on the predetermined reference time received in step S51, and selects the D2D radio parameter according to a measurement result from the list including the D2D radio parameter of each parameter selection threshold value (the propagation delay difference) (S52). Then, the base station eNB configures the selected D2D radio parameter in the user equipment UE1 (S53). Then, the user equipment UE1 performs the D2D communication (the PC5-based V2X communication) with another unit of user equipment UE2 using the configured D2D radio parameter (S54).

### (Measurement method of propagation delay difference)

The user equipment UE may measure propagation delay difference with the base station eNB by calculating a difference between a reference time of an external synchronization source (a global navigation satellite system (GNSS) or the like) received from the base station eNB, SIM, or the like and the reception timing of the DL signal. More specifically, a difference between a start timing of a subframe identified by the reference time of the external synchronization source and a start timing of a subframe of the received DL signal may be calculated, and the calculated difference may be determined to be the propagation delay difference. In this case, the reference time needs to mean the start timing of the subframe in the base station eNB (which is the same meaning as the DL transmission timing). Further, the reference time of the external synchronization source (for example, an offset to a UTC time) may be reported to the user equipment UE using the broadcast information, and the user equipment UE may use the reported reference time for a calculation of the propagation delay difference. The reference time of the external synchronization source corresponds to the propagation delay determination information in FIG. 17.

Further, the base station eNB may calculate a difference between a predetermined reference time reported from the user equipment UE (for example, a time of the external synchronization source (GNSS or the like) at the start timing of the subframe of a received DL signal) and the reference time of the start timing of the subframe of the DL signal detected by the base station eNB itself (for example, the time of the external synchronization source or the like) and determine the calculated difference to be the propagation delay difference.

As another method, the base station eNB may calculate the propagation delay difference between the base station eNB itself and the user equipment UE using a known timing alignment (TA) control process. Since the base station eNB always detects the propagation delay with the user equipment UE and performs the TA control, the propagation delay difference measured through the TA control can be applied to the embodiment, through it is limited to a case where the user equipment UE is in the RRC Connected state.

### (Supplemental matter in the embodiment)

The D2D radio parameters for the respective parameter selection threshold values (the propagation delay differences) may overlap, similar to the previous embodiment. Further, the parameter selection threshold values (the propagation delay differences) may overlap. Furthermore, hysteresis may be applied to the parameter selection threshold value (the propagation delay difference).

In the embodiment, instead of the propagation delay difference, the radio quality (for example, the RSRP) may be used. Though an error may be caused due to indoor propagation loss, etc., the propagation delay may be replaced with the radio quality because the radio quality is also lowered as the distance from the base station eNB increases. As a result, it is possible to implement an operation common to that of the previous embodiment.

In the embodiment described above, the transmission timing of the D2D signal in the user equipment UE is assumed to be the DL reception timing. In other words, from a point of view from the base station eNB, "deviation" is assumed to occur between the UL reception timing and the reception timing of the D2D signal. In this regard, in order to align the UL reception timing with the reception timing of the D2D signal, the base station eNB may perform the TA control according to the reception timing of the D2D signal when performing the UL scheduling.

This is specifically described with reference to FIG. 16. For example, in the subframes corresponding to the range of the transmission resource pool configured in the D2D radio parameter (of the configuration 2 (or 3)) of FIG. 16, a TA value, which is corrected so that the reception timing of the UL signal in the base station eNB is substantially the same as the reception timing of the D2D signal, may be reported to the user equipment.

In order to implement such an operation, the base station eNB may retain information indicating a subframe range to which normal TA control is applied and information indicating a subframe range to which a corrected TA value is applied (for example, a subframe range corresponding to the transmission resource pool of the configuration 2 or 3 in advance and determine whether the normal TA value or the corrected TA value is applied according to the subframe in which the TA command is transmitted to the user equipment UE. Further, an offset value may be reported to the user equipment in advance so that the corrected TA value can be calculated at the user equipment UE side, and the base station eNB may dynamically indicate as to whether the offset value is applied to the TA value using the UL grant for each subframe in which UL scheduling is performed. Since the PUCCH is not a channel transmitted according to the UL grant, the user equipment UE may apply the normal TA value or the semi-static TA value to the PUCCH. As a result, for example, in the subframes corresponding to the transmission resource pool of the configuration 2 (or the configuration 3), the reception timing of the D2D signal transmitted from the user equipment UE is substantially aligned with the reception timing of the UL signal, and thus the base station eNB can receive the D2D signal and UL signal at a single FFT timing.

As another method, the offset value of the transmission timing of the D2D signal may be included in the D2D radio parameter so that the UL reception timing and the reception timing of the D2D signal are aligned at the base station eNB side.

This is specifically described by referring to FIG. 16. For example, an offset value based on the propagation delay difference (or an average value) in each group may be included in the D2D radio parameter information configured in the D2D radio parameter (of the configuration 2 (or 3)). The user equipment UE applies the offset value to the original transmission timing of the D2D signal (which is the same as the DL reception timing) and transmits the D2D signal. As a result, for example, in the subframes corresponding to the transmission resource pool of the configuration 2 (or the configuration 3), the reception timing of the D2D signal transmitted from the user equipment UE is substantially aligned with the reception timing of the UL signal, and thus the base station eNB can receive the D2D signal and the UL signal at a single FFT timing.

The embodiment is described above. According to the embodiment, by configuring the various D2D radio parameters, it is possible to perform an operation for which the reception timing of the D2D signal using some UL resources and the reception timing of the UL signal are considered. Thus, the base station eNB can easily receive the D2D signal using a UL reception mechanism.

### <Supplemental matter>

In the embodiment, the resource pool to be received (monitored) by the base station eNB may be reported to the user equipment UE. The report may be made using RRC or broadcast information or may be included in the D2D radio parameter. As a result, the base station eNB need not perform the operation of always monitoring all the resource pools, and thus the processing load of the base station eNB can be reduced.

Further, the user equipment UE may include the UL packet to be transmitted using original UL resources (resources indicated by the UL grant) in the D2D signal and transmit the resulting signal using the resource pool to be received by the base station eNB. In this case, the user equipment UE may include an identifier indicating that the UL packet is included in the SCI or MAC control information, store (encapsulate) the UL packet in the MAC PDU, and transmit the resulting data to the base station eNB. Further, a new MAC PDU format version (a version indicating that it is an UL packet) may be specified as a 3GPP standard specification, and the UL packet may be stored in the MAC PDU of the new format to be transmitted.

Further, in the embodiments, in the subframes included in the transmission resource pool to which the resource allocation of the mode 2 (the autonomous resource allocation by the UE) is applied, the base station eNB may dynamically indicate (activation/de-activation), to the user equipment using DCI, as to whether the transmission of the D2D signal is allowed. As a result, for example, in the subframes in which the reception timing of the UL signal is different from the reception timing of the D2D signals (for example, the subframes corresponding to the resource pool of the configuration 2 or 3 in FIG. 16), an operation can be performed such that transmission of the D2D signal is allowed only if the UL resource allocation is not performed.

### <Supplemental embodiment>

As described above, for example, for the V2X, an operation is assumed, such as the operation of using the cellular communication for the V2X communication within the coverage and the operation of simultaneously performing the cellular communication for the non-V2X communication while using the D2D for the V2X communication within the coverage.

Here, performance (capability) necessary for performing the cellular communication and the D2D communication at the same time may not be supported depending on a type of user equipment UE used for V2X. Therefore, when it is necessary to perform the cellular communication and the D2D communication at the same time, it is necessary to provide a mechanism of enabling the user equipment UE to determine whether the cellular communication is prioritized or the D2D communication is prioritized.

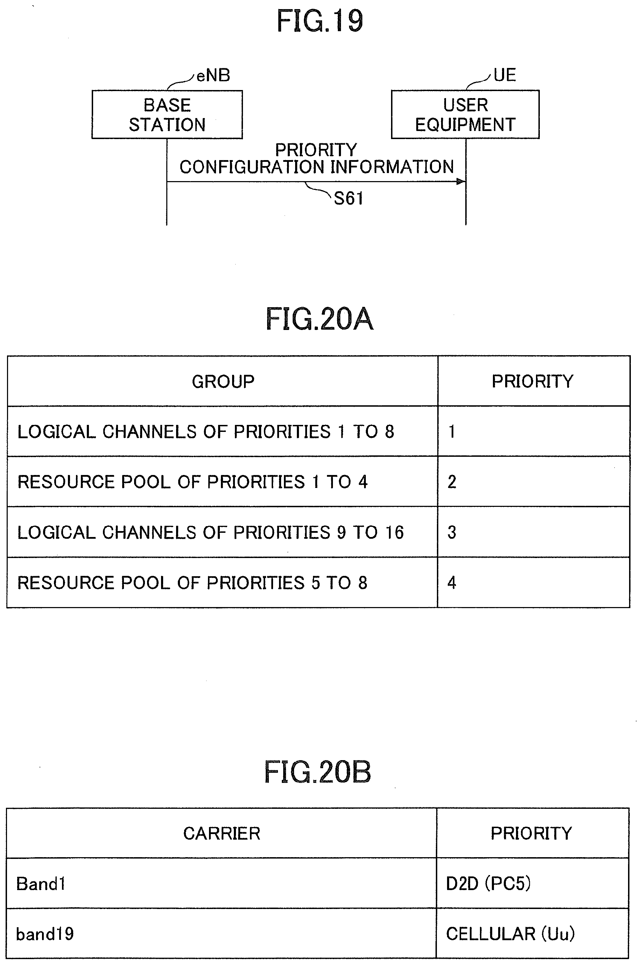

In this regard, in this embodiment, priority configuration information in which a priority between the cellular communication and the D2D communication is specified is defined, and the user equipment UE can perform the determination based on the priority. As illustrated in FIG. 19, the priority configuration information may be transmitted by broadcast information (SIB) or may be transmitted by RRC signaling. Further, instead of transmitting the list from the base station eNB to the user equipment UE, it may be pre-configured in the user equipment UE via a SIM, a core network, or the like. Further, the priority configuration information may be included in the D2D radio parameter in the previous embodiment. In other words, this embodiment may be combined with the previous embodiment. Further, this embodiment may be performed independently without being combined with the previous embodiment.

FIG. 20 is a diagram illustrating an example of the priority configuration information. For example, as illustrated in FIG. 20A, a priority may be configured between a group in which priorities for a plurality of logical channels are combined and a group in which priorities for a plurality of resource pools are combined. Further, as illustrated in FIG. 20B, it may be configured, for each carrier (each carrier in which both the cellular communication and the D2D communication are permitted), as to whether the cellular communication is prioritized or the D2D communication is prioritized. The priority of each logical channel can be configured according to a standard specification in usual LTE. Further, in Release 13 of 3GPP, discussion has been made in a direction in which it is possible to configure the priority for each resource pool.

The user equipment UE determines a packet which is preferentially transmitted based on the priority configuration information when transmission of a packet (for example, a non-V2X packet) by the cellular communication and transmission of a packet (for example, a V2X packet) by the D2D communication are simultaneously performed in the same subframe, and its simultaneous transmission capability is insufficient (for example, the transmission power is insufficient). The user equipment UE may drop transmission of a packet determined to have low priority (drop a packet), or hold the packet in a buffer and transmit the packet at another transmission opportunity. Further, the user equipment UE may preferentially allocate the transmission power to transmission of a packet determined to have high priority, and decrease the transmission power for transmission of a packet determined to have a low priority.

The user equipment UE may determine the priority by itself when the priority configuration information is not received or when the same priority is configured. As a specific example, for example, the user equipment UE may give priority to the packet transmission by the cellular communication by its own determination when transmission and reception are performed at the same time (for example, the packet transmission by the cellular communication and the D2D monitoring), and when the priority configuration information is not received (or the same priority is configured).

The embodiment is described above. According to the embodiment, when it is necessary to perform the cellular communication and the D2D communication at the same time, the user equipment UE can determine whether the cellular communication is prioritized or the D2D communication is prioritized. Additionally, according to the embodiment, it can be avoided to miss transmission (reception) of a packet with high priority because prioritization is performed. Furthermore, the base station eNB can implement the UL and D2D resource allocation in which a priority is considered.

Further, according to the embodiment, the operation in which the priority is variously defined based on the priority configuration information can be performed. For example, logical channels with priority levels 1 to 8 are assumed to be logical channels for transmitting and receiving the V2X packets, resource pools with priority levels 1 to 4 are assumed to be resource pools for transmitting and receiving the V2X packets, logical channels with priority levels 9 to 16 are assumed to be logical channels for transmitting and receiving the non-V2x packets, and resource pools with priority levels 5 to 8 are assumed to be resource pools for transmitting and receiving the non-V2X packets. In this case, by using the priority configuration information of FIG. 20(a), it is possible to perform the operation such that the priority levels decrease in the order of transmission and reception of the V2X packets by the cellular communication, transmission and reception of the V2X packets by the D2D communication, transmission and reception of the non-V2X packets by the cellular communication, and transmission and reception of the non-V2X packets by the D2D communication.

### <Functional configuration>

Exemplary function configurations of the user equipment UE and the base station eNB that perform the operation of the above-described embodiments are described. The user equipment UE and the base station eNB may have all the functions of the schemes of the embodiments or may have only the function of the scheme according to any one of the embodiments. Further, a method to be executed may be switched according to configuration information.

### (User equipment)

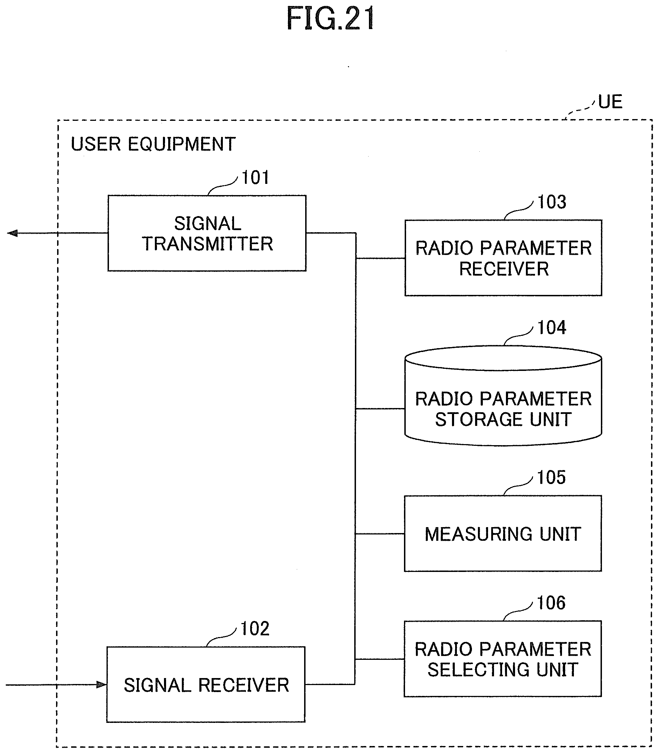

FIG. 21 is a diagram illustrating an example of a functional configuration of the user equipment according to the present embodiment. As illustrated in FIG. 21, the user equipment UE includes a signal transmitter 101, a signal receiver 102, a radio parameter receiver 103, a radio parameter storage unit 104, a measuring unit 105, and a radio parameter selecting unit 106. FIG. 21 illustrates only the functional units of the user equipment UE particularly related to the embodiment of the present invention, and functions (not illustrated) of performing at least operations conforming with LTE are also provided. The functional configuration illustrated in FIG. 21 is merely an example. Any classification and names can be used as function classification and names of the functional units as long as the operation according to the present embodiment can be performed.

The signal transmitter 101 has a function of generating various types of signals of the physical layer from based on signals of the higher layer to be transmitted from the user equipment UE and wirelessly transmitting the generated signals. Further, the signal transmitter 101 has a function of transmitting D2D signals and a transmission function the cellular communication. Furthermore, the signal transmitter 101 has a function of transmitting the D2D signal using one or more carriers.

The signal receiver 102 has a function of wirelessly receiving various signals from other units of user equipment UE or the base station eNB and obtaining signals of the higher layer based on the received signals of the physical layer. Further, the signal receiver 102 has a function of receiving the D2D signal and a function of receiving the cellular communication. Furthermore, the signal receiver 102 has a function of receiving the D2D signal using one or more carriers.

Further, the signal transmitter 101 and the signal receiver 102 have a function of performing the D2D communication (transmission and reception of the D2D signal) using (according to) the D2D radio parameter. Further, the signal transmitter 101 and the signal receiver 102 have a function of performing the D2D communication using the resources of the transmission/reception resource pool indicated by the D2D radio parameter. Furthermore, the signal transmitter 101 may operate to perform the UL communication instead of the D2D communication when the D2D radio parameter includes information that indicates to perform the UL communication, instead of the D2D communication. Further, the signal transmitter 101 may operate to select a resource among the resources of the transmission resource pool to perform the D2D communication when the D2D radio parameter includes information that indicates to select a resource among the resources of the transmission resource pool to perform the D2D communication.

Further, the signal transmitter 101 and the signal receiver 102 may select one of the UL communication and the D2D communication based on the priority specified between the UL communication and the D2D communication and perform the communication.

The radio parameter receiver 103 has a function of receiving the D2D radio parameter from the base station eNB. Further, the radio parameter receiver 103 has a function of receiving a list of D2D radio parameters for the respective radio quality ranges or the respective propagation delay ranges from the base station eNB.

The radio parameter storage unit 104 stores the D2D radio parameter or a list of D2D radio parameters received through the radio parameter receiver in a memory or the like.

The measuring unit 105 has a function of measuring the radio quality of the DL transmitted from the base station eNB or the propagation delay with the base station eNB. Further, the measuring unit 105 may measure a predetermined reference time used for a calculation of the propagation delay difference with the base station eNB and transmit the predetermined reference time to the base station eNB through the signal transmitter 101.

The radio parameter selecting unit 106 has a function of selecting the D2D radio parameter corresponding to the radio quality or the propagation delay measured by the measuring unit 105 from the list of D2D radio parameters. Further, the radio parameter selecting unit 106 reports the selected D2D radio parameter to the signal transmitter 101 and the signal receiver 102.

### (Base station)

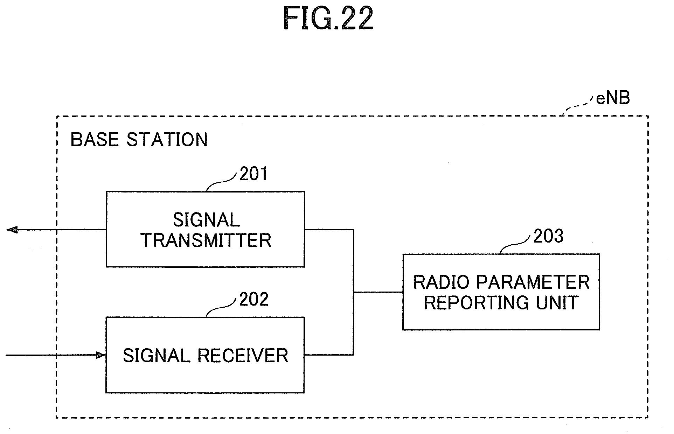

FIG. 22 is a diagram illustrating an example of a functional configuration of the base station according to the present embodiment. As illustrated in FIG. 22, the base station eNB includes a signal transmitter 201, a signal receiver 202, and a radio parameter reporting unit 203. FIG. 22 illustrates only the functional units of the base station eNB particularly related to the embodiment of the present invention, and functions (not illustrated) of performing at least operations conforming with LTE are also provided. Further, the functional configuration illustrated in FIG. 22 is merely an example. Any classification and names can be used as function classification and names of the functional units as long as the operation according to the present embodiment can be performed.

The signal transmitter 201 has a function of generating various types of signals of the physical layer based on signals of the higher layer to be transmitted from the base station eNB and wirelessly transmitting the generated signals. The signal receiver 202 has a function of wirelessly receiving various types of signals from the user equipment UE and acquiring signals of the higher layer from the received signals of the physical layer. Further, the signal transmitter 201 has a function of receiving the D2D signal in addition to the function of receiving the cellular communication.

The radio parameter reporting unit 203 has a function of selecting the D2D radio parameter corresponding to the radio quality or the transmission delay reported from the user equipment UE from the list of D2D radio parameters of the radio quality ranges or the propagation delay ranges from the base station eNB previously stored in the memory or the like, so as to report, to the user equipment UE, the D2D radio parameter. The radio parameter reporting unit 203 may receive, from the user equipment UE, a predetermined reference time used for a calculation of the propagation delay difference with the base station eNB instead of the propagation delay. Further, the radio parameter reporting unit 203 may calculate the transmission delay between the base station eNB itself and the user equipment UE based on the predetermined reference time and select the D2D radio parameter corresponding to the calculated transmission delay.

Further, the radio parameter reporting unit 203 may transmit, to the user equipment UE, the list of D2D radio parameters of the radio quality ranges or the propagation delay ranges from the base station eNB previously stored in the memory, etc.

All of the functional configurations of the user equipment UE and the base station eNB described above may be implemented entirely by a hardware circuit (for example, one or more IC chips), or a part of the functional configuration may be configured with a hardware circuit, and the remaining part may be implemented by a CPU and a program.

### (User equipment)

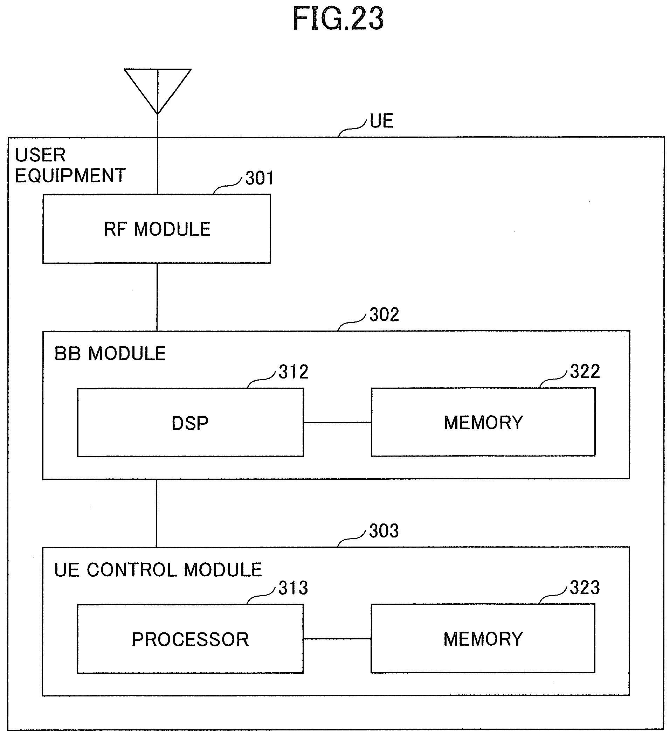

FIG. 23 is a diagram illustrating an example of a hardware configuration of the user equipment according to the present embodiment. FIG. 23 illustrates a configuration closer to an implementation example than that of FIG. 21. As illustrated in FIG. 23, the user equipment UE includes a radio frequency (RF) module 301 that perform processing related to radio signals, a baseband (BB) processing module 302 that performs baseband signal processing, and UE control module 303 that performs processing of the higher layer and the like.

The RF module 301 performs digital-to-analog (D/A) conversion, modulation, frequency transform, power amplification, etc., on a digital baseband signal received from the BB processing module 302 and generates a radio signal to be transmitted through an antenna. Further, the RF module 301 performs frequency transform, analog to digital (A/D) conversion, demodulation, etc., on a received radio signal, generates a digital baseband signal, and transfers the digital baseband signal to the BB processing module 302. The RF module 301 includes, for example, a part of the signal transmitter 101 and a part of the signal receiver 102 of FIG. 21.

The BB processing module 302 performs a process of converting an IP packet into a digital baseband signal and vice versa. A digital signal processor (DSP) 312 is a processor that performs signal processing in the BB processing module 302. A memory 322 is used as a work area of the DSP 312. The BB processing module 302 includes, for example, a part of the signal transmitter 101, a part of the signal receiver 102, and a part of the measuring unit 105 of FIG. 21.

The UE control module 303 performs protocol processing of the IP layer, processing of various types of applications, and the like. A processor 313 is a processor that performs processing performed by the UE control module 303. A memory 323 is used as a work area of the processor 313. Further, the UE control module 303 includes, for example, the radio parameter receiver 103, the radio parameter storage unit 104, a part of the measuring unit 105, and the radio parameter selecting unit 106 of FIG. 21.

### (Base station)

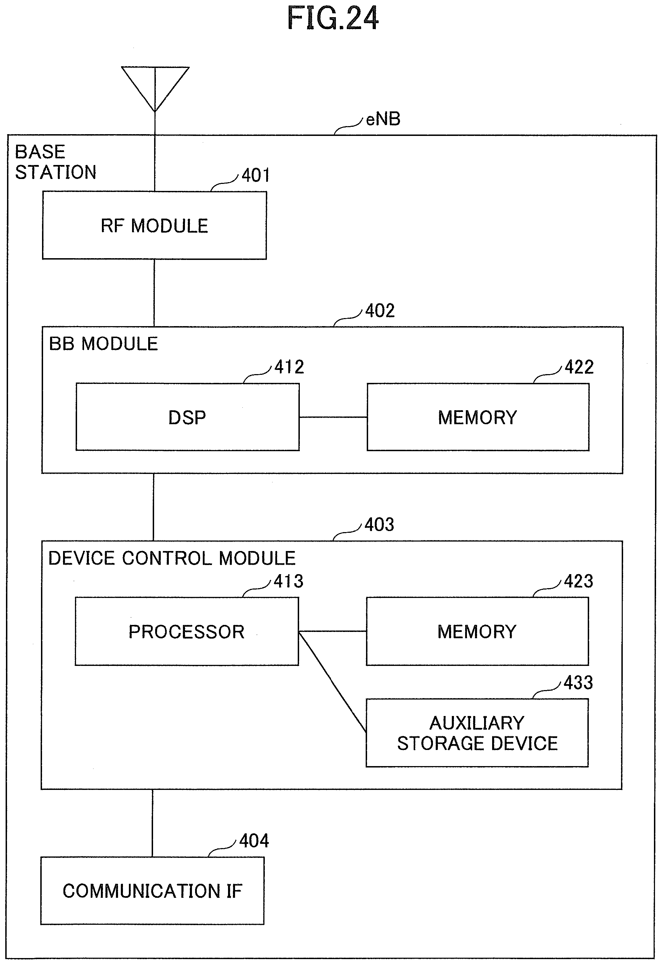

FIG. 24 is a diagram illustrating an example of a hardware configuration of the base station according to the present embodiment. FIG. 24 illustrates a configuration closer to an implementation example than that of FIG. 22. As illustrated in FIG. 24, the base station eNB includes an RF module 401 that performs processing related to radio signals, a BB processing module 402 that performs baseband signal processing, a device control module 403 that performs processing of the higher layer and the like, and a communication IF 404 serving as an interface for a connection with a network.

The RF module 401 performs D/A conversion, modulation, frequency transform, power amplification, etc., on a digital baseband signal received from the BB processing module 402 and generates a radio signal to be transmitted through an antenna. Further, the RF module 401 performs frequency transform, A/D conversion, demodulation, etc., on a received radio signal, generates a digital baseband signal, and transfers the digital baseband signal to the BB processing module 402. The RF module 401 includes, for example, a part of the signal transmitter 201 and the signal receiver 202 illustrated in FIG. 22.

The BB processing module 402 performs a process of converting an IP packet into a digital baseband signal and vice versa. A DSP 412 is a processor that performs signal processing in the BB processing module 402. A memory 422 is used as a work area of the DSP 412. The BB processing module 402 includes, for example, a part of the signal transmitter 201 and a part of the signal receiver 202 of FIG. 22.

The device control module 403 performs protocol processing of the IP layer, operation and maintenance (OAM) processing, etc. A processor 413 is a processor that performs processing performed by the device control module 403. A memory 423 is used as a work area of the processor 413. An auxiliary storage device 433 is, for example, an HDD or the like, and stores various types of configuration information and the like used for an operation of the base station eNB. The device control module 403 includes, for example, the radio parameter reporting unit 203 illustrated in FIG. 22.

### <Conclusion>

According to the embodiments, there is provided user equipment that supports D2D communication and cellular communication, the user equipment including a receiver that receives a radio parameter for the D2D communication corresponding to radio quality of a downlink signal transmitted from a base station or a propagation delay between the base station and the user equipment, and a communication unit that performs the D2D communication using the received radio parameter for the D2D communication corresponding to the radio quality or the propagation delay. By the user equipment UE, a technique can be provided that allows coexistence of the D2D communication and the cellular communication.

Further, the receiver may receive, from the base station, the radio parameter for the D2D communication corresponding to the radio quality or the propagation delay. Thus, the user equipment UE does not select the D2D radio parameter used for the D2D communication but causes the base station eNB to select the D2D radio parameter used for the D2D communication. Further, by selecting, by the base station eNB side, the D2D radio parameter, flexible control can be performed, such as easily changing the threshold value range.

Further, the receiver may receive, from the base station, a list of radio parameters for the D2D communication for ranges of the radio quality or ranges of the propagation delay; the receiver may further include a measuring unit that measures the radio quality or the propagation delay, and a selecting unit that selects the radio parameter for the D2D communication corresponding to the measured radio quality or the measured propagation delay from the list of radio parameters for the D2D communication for the respective radio quality levels or the respective propagation delays; and the communication unit may perform the D2D communication using the selected radio parameter for the D2D communication corresponding to the radio quality or the propagation delay. As a result, the user equipment UE can select an appropriate D2D radio parameter even if a connection is not established with the base station eNB (during RRC IDLE).

Further, a configuration of a resource pool may be included in the radio parameter for the D2D communication, and the communication unit may perform the D2D communication using resources of the resource pool corresponding to the radio quality or the propagation delay. As a result, it is possible to implement the D2D communication using a different resource pool for each radio quality range or each propagation delay range.

Further, information that indicates to perform UL communication instead of the D2D communication may be included in the radio parameter for the D2D communication, and the communication unit may perform the UL communication instead of the D2D communication when the information that indicates to perform UL communication instead of the D2D communication is included in the received radio parameter for the D2D communication corresponding to the radio quality or the propagation delay. As a result, for example, when the user equipment UE is located near the center of the cell, it is possible to prohibit transmission of the D2D signal, and it is possible to suppress interference with the UL signal.

Further, information that indicates to select a resource among the resources of the resource protocol to perform the D2D communication may be included in the radio parameter for the D2D communication, and the communication unit may select a resource from the resources of the resource pool to perform the D2D communication. As a result, for example, it is possible to forcibly cause the user equipment UE located at the cell edge to perform the resource allocation of the mode 2 (the autonomous resource allocation by the UE), and when there are a plurality of units of user equipment UE in the cell, it is possible to suppress the number of RRC connections in the base station eNB.

Further, the configurations of the resource pools included in the radio parameter for the D2D communication may be time division multiplexed on a propagation delay range-by-propagation delay range basis. As a result, the D2D signals transmitted from the units of user equipment UE are grouped on the time axis on the propagation delay range-by-propagation delay range basis. Further, in the base station eNB, the reception timings of the D2D signals transmitted from the units of user equipment UE are substantially aligned. Therefore, the base station eNB can receive the D2D signals from the units of user equipment UE using a single FFT timing.

Further, information indicating transmission timing of each range of the propagation delay may be further included in the radio parameter for the D2D communication. Thus, for example, it is possible to align the reception timing of the UL signal with the reception timing of the D2D signal in the base station eNB, and the base station eNB can receive the D2D signal transmitted from each user equipment UE and the UL signal using a single FFT timing.

Further, the communication unit may select one of the UL communication and the D2D communication based on a priority specified between the UL communication and the D2D communication to perform communication. As a result, when it is necessary to perform the cellular communication and the D2D communication at the same time, the user equipment UE can determine whether the cellular communication is prioritized or the D2D communication is prioritized.

According to an embodiment, there is provided a communication method performed by user equipment that supports D2D communication and cellular communication, the communication method including a step of receiving a radio parameter for the D2D communication corresponding to radio quality of a downlink signal transmitted from a base station or a propagation delay between the base station and the user equipment, and a step of performing the D2D communication using the received radio parameter for the D2D communication corresponding to the radio quality or the propagation delay. By the user equipment UE, a technique can be provided that allows coexistence of the D2D communication and the cellular communication.

### <Supplement to Embodiments>

The embodiments may be combined. For example, the embodiments may be combined by replacing the "radio quality" with the "propagation delay difference" or the embodiments may be combined by conversely replacing the "propagation delay difference" with the "radio quality." The function/operation examples described in one of the embodiments can be applied to another one of the embodiments.

In the embodiments, the method of requesting the base station eNB to perform the resource allocation according to D2D of the related art is described as the "mode 1," and the method in which the user equipment UE autonomously selects the transmission resources from the resource pool is described as the "mode 2." However, the terms "mode 1" and "mode 2" are merely used for convenience of description. Although other terms are newly defined in V2X, they are included in the embodiments if they indicate the method of requesting the base station eNB to perform the resource allocation and the method in which the user equipment UE autonomously selects the transmission resources from the resource pool.

The PSCCH may be another control channel as long as it is a control channel for transmitting control information (SCI and the like) used for the D2D communication. The PSSCH may be another data channel as long as it is a data channel for transmitting data (the MAC PDU and the like) used for the D2D communication of the D2D communication. The PSDCH may be another data channel as long as it is a data channel for transmitting data (the discovery message and the like) used for the D2D communication of the D2D discovery.

As described above, the configuration of each of the devices (the user equipment UE and the base station eNB) described in the embodiments of the present invention may be implemented such that a CPU executes a program in a device including the CPU and a memory, may be implemented by hardware such as a hardware circuit including processing logics described in the present embodiment or the like, or may be implemented by a combination of a program and hardware.

Reporting of information is not limited to the aspects/embodiments described in this specification, and may be performed by another method. For example, reporting of information may be implemented by physical layer signaling (e.g., DCI (Downlink Control Information)), UCI (Uplink Control Information)), higher layer signaling (e.g., RRC signaling, MAC signaling, broadcast information (MIB (Master Information Block), SIB (System Information Block)), other signals or a combination thereof. Furthermore, the RRC message may be referred to as RRC signaling. Furthermore, the RRC message may be, for example, an RRC connection setup (RRC Connection Setup) message, an RRC connection reconfiguration (RRC Connection Reconfiguration) message, and so forth.

The aspects/embodiments described in the specification can be applied to LTE (Long Term Evolution); LTE-A (LTE-Advanced); SUPER 3G; IMT-Advanced; 4G; 5G; FRA (Future Radio Access); W-CDMA (registered trademark); GSM (registered trademark); CDMA 2000; UMB (Ultra Mobile Broadband); IEEE 802.11 (Wi-Fi); IEEE 802.16 (WiMAX); IEEE 802.20; UWB (Ultra-Wide Band); Bluetooth (registered trademark); a system that utilizes another suitable system and/or a next generation system evolved based on these.

The decision or determination may be performed by a value (0 or 1) represented by one bit; may be performed by a Boolean value (Boolean: true or false); or by numerical value comparison (e.g., a comparison with a predetermined value).

Note that the terms described in this specification and/or terms required for understanding the specification may be replaced with terms having the same or similar meanings. For example, a channel and/or a symbol may be a signal (signal). Furthermore, a signal may be a message.

The UE may be referred to, by a person skilled in the art, as a subscriber station; a mobile unit; a subscriber unit; a wireless unit; a remote unit; a mobile device; a wireless device; a wireless communication device; a remote device; a mobile subscriber station; an access terminal; a mobile terminal; a wireless terminal; a remote terminal; a handset; a user agent; a mobile client; a client; or some other suitable terms.

The each aspect/embodiment described in the specification may be used alone; may be used in combination; or may be used by switching depending on execution. Furthermore, reporting of predetermined information (e.g., reporting of "being X") is not limited to the method of explicitly performing, and may be performed implicitly (e.g., not perform reporting of the predetermined information).

The terms "determine (determining)" and "decide (determining)" may encompass a wide variety of operations. The "determine" and "decide" may include, for example, "determine" and "decide" what is calculated (calculating), computed (computing), processed (processing), derived (deriving), investigated (investigating), looked up (looking up) (e.g., looked up in tables, databases, or other data structures), ascertained (ascertaining). Furthermore, the "determine" and "decide" may include deeming that "determination" and "decision" are made on reception (receiving) (e.g., receiving information), transmission (transmitting) (e.g., transmitting information), input (input), output (output), and access (accessing) (e.g., accessing data in a memory). Furthermore, the "determine" and "decide" may include deeming that "determination" and "decision" are made on what is resolved (resolving), selected (selecting), chosen (choosing), established (establishing), and compared (comparing). Namely, the "determine" and "decide" may include deeming that some operation is "determined" or "decided."

The phrase "based on" used in this specification does not imply "based only on" unless explicitly stated otherwise. In other words, the phrase "based on" implies both "based only on" and "based at least on."

Furthermore, the order of the processing procedures, sequences, and so forth of the aspects/embodiments described in the specification may be re-arranged, provided that they do not contradict. For example, for the methods described in the specification, the elements of various steps are presented in an exemplary order, and are not limited to the specific order presented.

The input/output information, etc. may be stored in a specific location (e.g., a memory), or managed in a management table. The input/output information, etc. may be overwritten, updated, or additionally written. The output information, etc. may be deleted. The input information, etc. may be transmitted to another device.

Reporting of predetermined information (e.g., reporting of "being X") is not limited to the method of explicitly performing, and may be implicitly performed (e.g., reporting of the predetermined information is not performed).

The information signals, etc. described in the specification may be represented by using any of a variety of different techniques. For example, the data, indication, command, information, signal, bit, symbol, chip, etc. may be represented by a voltage, an electric current, an electromagnetic wave, a magnetic field or magnetic particles, a light field or photons, or any combination thereof.

The embodiments of the present invention are described above, but the disclosed invention is not limited to the above embodiments, and those skilled in the art would appreciate various modified examples, revised examples, alternative examples, substitution examples, and so forth. In order to facilitate understanding of the invention, specific numerical value examples are used for description, but the numerical values are merely examples, and certain suitable values may be used unless as otherwise stated. The classification of items in the above description is not essential to the present invention. Matters described in two or more items may be combined and used as necessary, and a matter described in one item may be applied to a matter described in another item (provided that they do not contradict). The boundary between functional units or processing units in a functional block diagram does not necessarily correspond to the boundary between physical parts. Operations of a plurality of functional units may be performed physically by one component, or an operation of one functional unit may be physically performed by a plurality of parts. In the sequences and flowcharts described in the embodiments, the order may be changed as long as there is no inconsistency. For the sake of convenience of processing description, the user equipment UE and the base station NB are described using the functional block diagrams, but such devices may be implemented by hardware, software, or a combination thereof. Software executed by the processor included in the user equipment UE according to the embodiment of the present invention and software executed by the processor included in the base station eNB according to the embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate storage medium.

In the embodiments, the signal transmitter 101 and the signal receiver 102 are examples of a communication unit. The D2D radio parameter is an example of a radio parameter for the D2D communication.

This international patent application is based upon and claims the benefit of priority of Japanese Patent Application No. 2016-011072 filed on January 22, 2016 and the entire contents of Japanese Patent Application No. 2016-011072 are incorporated herein by reference.

### LIST OF REFERENCE SYMBOLS

- UE: user equipment
- eNB: base station
- 101: signal transmitter
- 102: signal receiver
- 103: radio parameter receiver
- 104: radio parameter storage unit
- 105: measuring unit
- 106: radio parameter selecting unit
- 201: signal transmitter
- 202: signal receiver
- 203: radio parameter reporting unit
- 301: RF module
- 302: BB processing module
- 303: UE control module
- 304: SIM slot
- 401: RF module
- 402: BB processing module
- 403: device control module
- 404: communication IF

## Claims

1. User equipment that supports D2D communication and cellular communication, comprising:
a receiver that receives a radio parameter for the D2D communication corresponding to a downlink radio quality or a propagation delay between a base station and the user equipment; and
a communication unit that performs the D2D communication using the received radio parameter for the D2D communication corresponding to the radio quality or the propagation delay.

2. The user equipment according to claim 1, wherein the receiver includes a parameter receiver that receives, from the base station, the radio parameter for the D2D communication corresponding to the radio quality or the propagation delay.

3. The user equipment according to claim 1, wherein the receiver receives, from the base station, a list of radio parameters for the D2D communication for ranges of the radio quality or ranges of the propagation delay,
wherein the user equipment further includes
a measuring unit that measures the radio quality or the propagation delay, and
a selecting unit that selects the radio parameter for the D2D communication corresponding to the measured radio quality or the measured propagation delay from the list of radio parameters for the D2D communication for the radio quality or the propagation delay, and
wherein the communication unit performs the D2D communication using the selected radio parameter for the D2D communication corresponding to the radio quality or the propagation delay.

4. The user equipment according to any one of claims 1 to 3, wherein a configuration of a resource pool is included in the radio parameter for the D2D communication, and
wherein the communication unit performs the D2D communication using a resource of a resource pool corresponding to the radio quality or the propagation delay.

5. The user equipment according to any one of claims 1 to 4,
wherein information that indicates to perform UL communication instead of the D2D communication is included in the radio parameter for the D2D communication, and
wherein the communication unit performs the UL communication instead of the D2D communication when the information that indicates to perform the UL communication instead of the D2D communication is included in the received radio parameter for the D2D communication corresponding to the radio quality or the propagation delay.

6. The user equipment according to claim 4, wherein information that indicates to select a resource among resources of the resource pool to perform the D2D communication is included in the radio parameter for the D2D communication, and
the communication unit selects the resource from the resources of the resource pool to perform the D2D communication.

7. The user equipment according to claim 4, wherein configurations of resource pools included in the radio parameter for the D2D communication are time division multiplexed on a propagation delay range-by-propagation delay range basis.

8. The user equipment according to claim 7, wherein the radio parameter for the D2D communication further includes, for each range of the propagation delay, information indicating transmission timing.

9. The user equipment according to any one of claims 1 to 8, wherein the communication unit selects, based on a priority specified between the UL communication and the D2D communication, one of the UL communication and the D2D communication to perform communication.

10. A communication method performed by user equipment that supports D2D communication and cellular communication, the communication method comprising:
receiving a radio parameter for the D2D communication corresponding to a downlink radio quality or a propagation delay between a base station and the user equipment; and
performing the D2D communication using the received radio parameter for the D2D communication corresponding to the radio quality or the propagation delay.
